Europäisches Patentamt

European Patent Office

Office européen des brevets

(11) Numéro de publication: **0 006 669**
**A1**

## (12) DEMANDE DE BREVET EUROPEEN

(21) Numéro de dépôt: 79200333.7

(22) Date de dépôt: 25.06.79

(51) Int. Cl.³: **H 02 K 19/10, H 02 K 29/02**

(30) Priorité: 28.06.78 FR 7819343
19.06.79 FR 7915703

(43) Date de publication de la demande: **09.01.80**
**Bulletin 80/1**

(84) Etats contractants désignés: **AT BE CH DE GB IT LU NL SE**

(71) Demandeur: **FABRIQUE NATIONALE HERSTAL en abrégé FN Société Anonyme, B-4400 Herstal (BE)**

(72) Inventeur: **Rutten, Jean J., rue de Fétinne 78, B-4020 Liege (BE)**

(74) Mandataire: **Bockstael, Daniel, M.F.J. Bockstael Arenbergstraat 13, B-2000 Anvers (BE)**

(54) **Machine électrique à reluctance variable.**

(57) L'invention concerne une machine à réluctane variable, du type constitué par: une partie fixe (1); une partie mobile (8); sur l'une de ces parties, des inducteurs (2, 3, 4) et sur l'autre, au moins une pièce polaire (9, 10), et un circuit (5, 6, 7) pour l'alimentation séquentielle desdits inducteurs (2, 3, 4), ces derniers étant à tout moment magnétiquement isolés l'un de l'autre, quelles que soient la position de la pièce polaire et l'alimentation, le déplacement de la pièce mobile (9, 10) s'effectuant dans la direction des vecteurs induction, eux-mêmes orthogonaux à l'axe de la machine.

0006669

- 1 -

## Machine électrique à réluctance variable.

La présente invention concerne une machine électrique à réluctance variable.

Bien que des machines à réluctance variable soient connues depuis un siècle au moins, la littérature scientifique et technique est particulièrement pauvre à leur sujet. La raison en est qu'elles n'ont offert que peu d'intérêt pratique, vis-à-vis d'autres types de machines électriques.

En effet, les machines à réluctance variable connues ont une puissance massique défavorable et un rendement extrêmement modeste, principalement dû aux pertes par hystérésis magnétique dans les matériaux ferro-magnétiques et par courants de Foucault dans tous les matériaux conducteurs constitutifs de la machine.

Dans la pratique, on ne rencontre donc de telles machines que sous forme de moteurs d'une puissance bien inférieure à 1 kW et avec un couple de démarrage particulièrement bas, voire nul.

La présente invention permet de pallier les désavantages susmentionnés.

Une machine à réluctance variable selon l'invention est du type constitué par : une partie fixe; une partie mobile;

des inducteurs sur l'une de ces parties et au moins une pièce polaire sur l'autre; et un circuit pour l'alimentation séquentielle desdits inducteurs, ces derniers étant à tout moment magnétiquement isolés l'un de l'autre quels que soient la position de ladite pièce polaire et l'état dudit circuit d'alimentation. Elle se caractérise principalement en ce que le déplacement de la pièce mobile s'effectue dans la direction des vecteurs induction, eux-mêmes orthogonaux à l'axe de la machine.

Par inducteur il faut entendre soit un générateur de champ magnétique unique, soit deux ou plusieurs inducteurs disposés dans le prolongement l'un de l'autre (générateurs coaxiaux, diamétralement opposés etc...) et alimentés simultanément.

Par "magnétiquement isolés" il faut comprendre que le milieu séparant deux inducteurs quelconques dans la machine présente une résistance magnétique largement supérieure (de 20 à 30 fois au moins) à celle des entrefers usuels en électrotechnique.

De préférence, chaque inducteur d'une machine selon l'invention est doté d'une alimentation propre, indépendante de celle des autres inducteurs.

Pour plus de clarté, l'invention est décrite ci-après avec référence aux dessins illustratifs et non restrictifs annexés, dans lesquels :

la figure 1 est une vue schématique d'une machine selon l'invention;
la figure 2 représente l'une des nombreuses variantes d'exécution d'un entrefer variable, conformément à l'invention;
la figure 3 montre une réalisation pratique de l'invention, de façon simplifiée;

la figure 4 est une coupe selon la ligne IV-IV de la figure 3;

la figure 5 montre un circuit d'alimentation pour une machine selon la figure 3;

la figure 6 est une coupe axiale d'une autre réalisation d'une machine selon l'invention;

la figure 7 montre, de face, un quart de la partie fixe, dite porte-bobines, de la machine selon la figure 6;

la figure 8 montre, en coupe, une bobine;

la figure 9 est une vue de face d'un quart de la partie mobile portant les pièces polaires de la machine selon la figure 6;

la figure 10 représente schématiquement un autre circuit d'alimentation; et

la figure 11 représente schématiquement une variante d'exécution du circuit selon la figure 10.

Dans la suite de l'exposé, on ne considèrera la machine que dans sa forme "moteur", la forme "générateur" étant ensuite aisément déductible par l'homme du métier.

Dans un moteur à réluctance variable, la force motrice mécanique résulte d'une variation de réluctance provoquée par une variation de géométrie d'un circuit magnétique. Cette variation résulte d'une diminution d'entrefer.

La présente invention repose principalement sur deux options :

1.- pour une variation d'entrefer donnée, il faut employer la quantité minimale possible de fer, c'est-à-dire la quantité déterminée par la section magnétique désirée et la longueur strictement nécessaire pour entourer le cuivre nécessairement présent; il faut donc réaliser des circuits séparés pour chaque élément moteur de la machine, respectivement pour chaque entrefer variable;

- 4 -          0006669

2.- les parties du moteur ayant des fonctions de rigidité et de résistance mécanique uniquement doivent être réalisées en matériaux non magnétiques et non conducteurs, de manière à éviter toutes pertes hystérésis et par courants de Foucault.

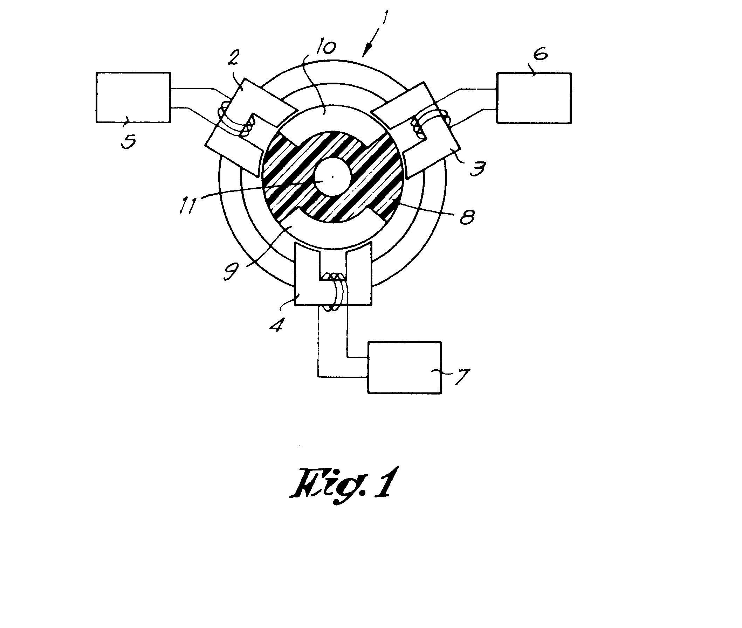

La figure 1 illustre ces principes.  Un stator $\underline{1}$ en une matière synthétique appropriée supporte trois inducteurs $\underline{2}$, $\underline{3}$ et $\underline{4}$, chacun pourvu de son propre circuit d'alimentation/commutation, respectivement $\underline{5}$, $\underline{6}$ et $\underline{7}$.

Dans le stator $\underline{1}$ est logé un rotor $\underline{8}$, constitué par un disque en matière synthétique portant deux pièces polaires, respectivement $\underline{9}$ et $\underline{10}$.  Ce rotor est calé sur l'arbre moteur $\underline{11}$.

On voit immédiatement que les circuits magnétiques séquentiellement engendrés par les inducteurs $\underline{2-4}$ sous le contrôle des circuits $\underline{5-7}$ sont magnétiquement isolés l'un de l'autre.  Cette dernière expression signifie que l'entrefer qui les sépare est largement supérieur aux entrefers usuels en électrotechnique.

On remarquera également que l'on utilise ici les lignes de flux magnétique extérieures aux bobines $\underline{2-4}$, contrairement à la pratique usuelle (lignes de flux extérieures; lignes situées à l'extérieur d'un volume-enveloppe fictif dans lequel s'inscrit l'inducteur).

En outre, le déplacement de la pièce mobile $\underline{8}$ s'effectue dans la direction des vecteurs induction des champs produits par les inducteurs $\underline{2-4}$, vecteurs eux-mêmes orthogonaux à l'axe de la machine.

Chaque pièce polaire $\underline{9}$ et $\underline{10}$ a une longueur au moins égale à celle d'un inducteur $\underline{2-4}$ et préférablement légèrement supérieure à cette dernière.  Dans ce cas, la différence de longueur permet à coup sûr d'effectuer les commutations lorsque les entrefers sont minimum.

Afin d'obtenir un couple constant, ou variant peu, il est souhaitable que le rapport du nombre d'inducteurs à celui de pièces polaires soit égal à celui de deux nombres premiers entre eux. On obtient ainsi que le nombre de pas moteurs par tour est égal au produit de ces deux nombres premiers. Ces derniers seront évidemment choisis en fonction des cas d'espèce.

Une particularité d'un moteur selon l'invention est d'offrir un couple statique très important, pouvant facilement atteindre 550% et plus du couple dynamique. Ceci est particulièrement important dans de nombreuses applications (entraînement de tables de machines-outils etc.).

La courbe couple dynamique-vitesse est très raide à bas régime, c'est-à-dire que la vitesse varie peu lors d'une grande variation du couple résistant.

A couple constant, la vitesse est proportionnelle à la tension et ce dans une large plage de vitesse, avec comme conséquence une grande facilité de réglage de la vitesse.

Il est évident qu'un moteur selon l'invention peut être réalisé dans des géométries et des conformations diverses.

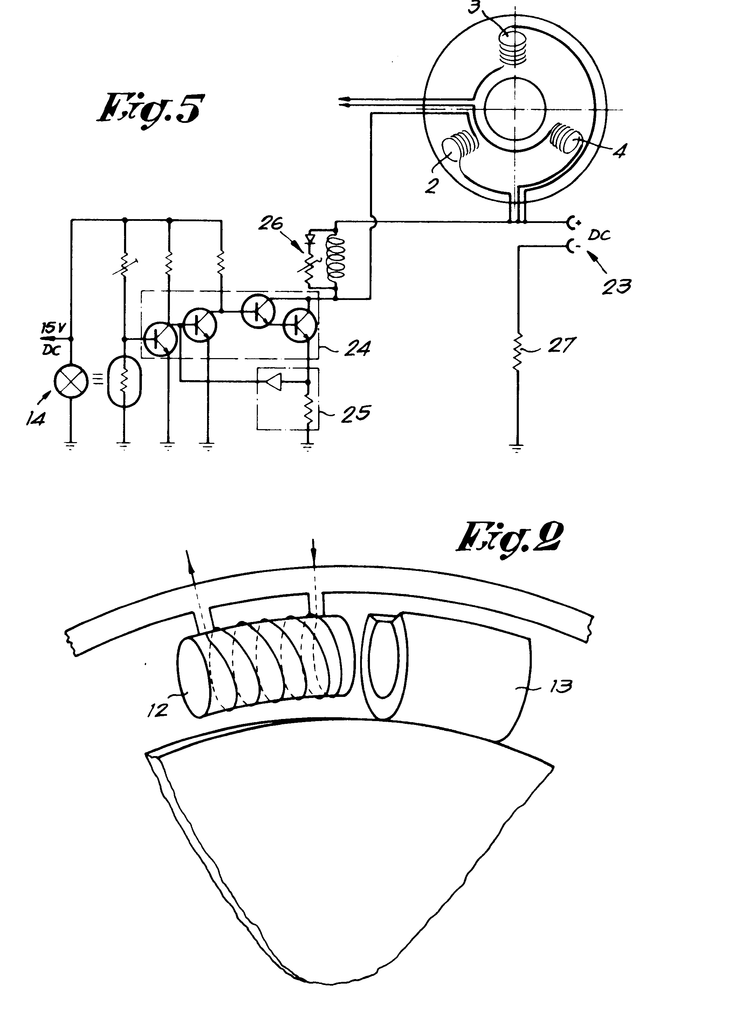

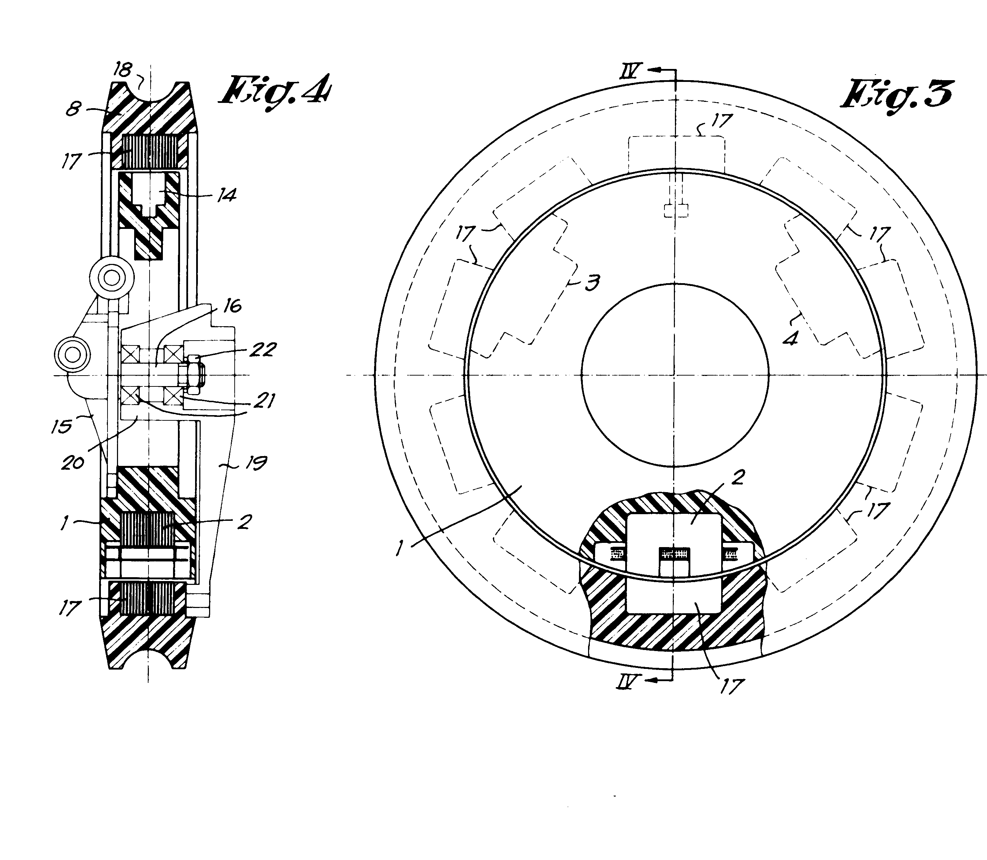

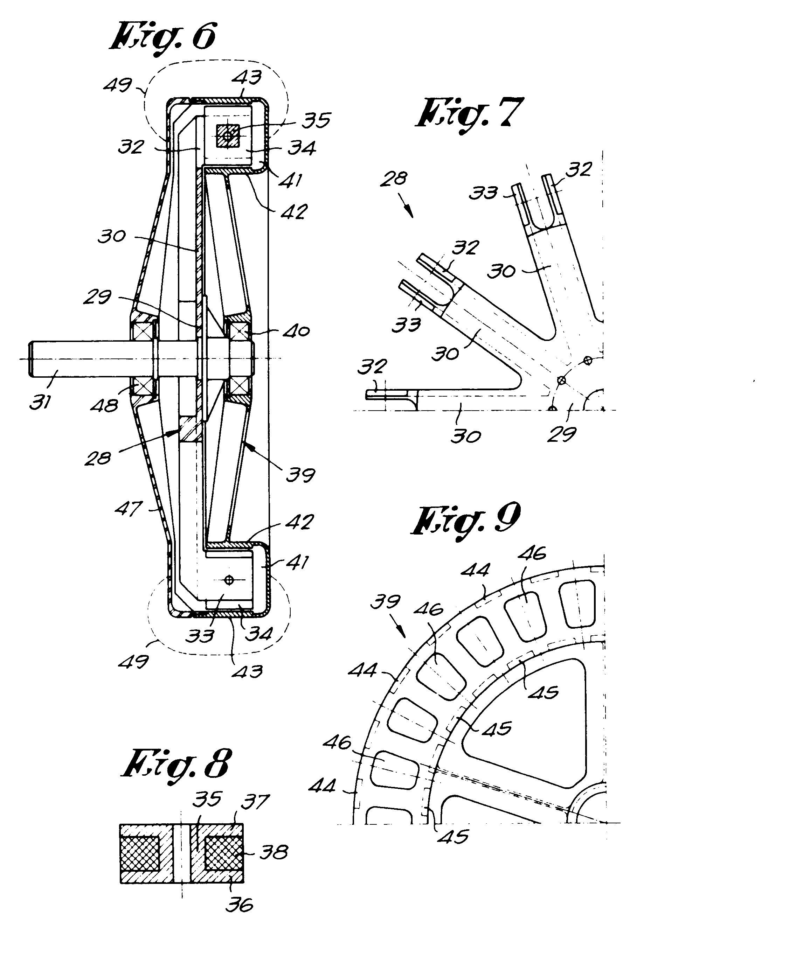

Le stator peut être externe (figures 1 et 2) ou interne (figures 3 et 4 décrites ultérieurement).

Dans l'exemple de la figure 2, les inducteurs sont constitués par des bobines toriques 12 et les pièces polaires par des éléments tubulaires 13 venant successivement coiffer lesdites bobines.

L'utilisation de matières synthétiques offre de très nombreux avantages :

- diminution des pertes par hystérésis;

- suppression totale des pertes par courants de Foucault dans les parties portantes;

- diminution notable du poids;

- aspect extérieur présentable sans finition;

- bonne isolation électrique;

- diminution du nombre de pièces;

- suppression des vibrations entre pièces métalliques;

- résistance à la corrosion;

- facilité de construction;

- diminution du coût de fabrication.

Il est entendu que de nombreuses matières peuvent entrer en considération. La composition ci-après n'est donc donnée qu'à simple titre indicatif.

| | |
|---|---|
| résine thermodurcissable époxy (GY 250) | 100 parties en poids |
| durcisseur (HY 830) | 30 parties en poids |
| durcisseur (HY 850) | 30 parties en poids |
| charge : calcaire 0,3 à 0,7 mm | 400 parties en poids. |

(charge de rupture : 1 $kg/mm^2$; module d'élasticité : 713 $kg/mm^2$).

Les possibilités et avantages sus-mentionnés sont illustrés par l'exemple pratique des figures 3 et 4. Dans ce cas, le moteur forme partie d'une roue pouvant équiper par exemple un caddie de golf.

Le stator 1 est réalisé par injection, sous forme d'un disque annulaire dans lequel sont noyés trois inducteurs 2-4 et trois capteurs 14 (dont un seul est représenté). Ce stator 1 est boulonné à un porte-fusée 15, avec fusée 16.

Le rotor 8, externe, est un élément annulaire dans lequel sont noyées en l'occurrence dix pièces polaires 17. Il est doté d'une gorge périphérique 18 formant jante pour recevoir un pneu (non représenté).

Le rotor 8 est fixé aux extrémités de branches 19 s'étendant en étoile à partir d'un moyeu 20 monté sur la fusée 16 à l'intervention de deux roulements 21 et de l'écrou de retenue 22.

L'ensemble peut être monté tel quel sur un caddie par exemple. A remarquer que, vu les caractéristiques du moteur selon l'invention, aucun réducteur de vitesse n'est requis.

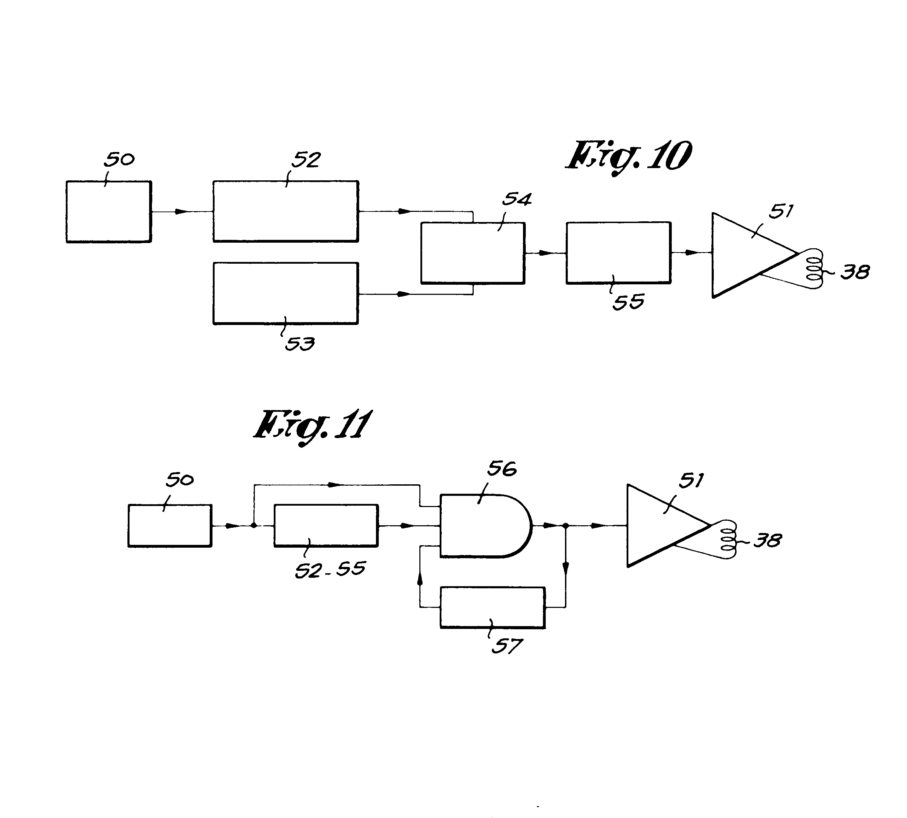

Le circuit d'alimentation/commutation de ce moteur peut être du type schématisé à la figure 6.

Une batterie 23 fournit le courant nécessaire. Les signaux provenant de chaque capteur 14 (optique, de proximité ou autre) sont amplifiés par l'amplificateur 24, protégé par un limiteur d'intensité 25.

De par son principe, un moteur selon l'invention ne peut accepter les circuits classiques de suppression des surtensions aux bornes des inducteurs, car ceux-ci augmenteraient les constantes de temps de façon inacceptable. C'est pourquoi le circuit de suppression est principalement constitué par une résistance V.D.R. 26 (du type utilisé dans les téléviseurs).

Le circuit sus-décrit se répète pour les inducteurs 3 et 4.

0006669

Un rhéostat 27 permet de faire varier l'intensité du courant d'alimentation.

La machine selon la figure 6 comporte une partie fixe 28 réalisée en alliage léger et sous forme d'un moyeu 29 (figure 7) à branches radiales 30, ce moyeu étant calé sur un arbre fixe 31.

L'extrémité libre de chacune des branches 30 présente deux languettes 32 et 33 mutuellement parallèles, destinées à recevoir entre elles une bobine 34. Cette dernière comporte un noyau 35 à section carrée se terminant en chaque extrémité par une plaque rectangulaire, respectivement 36 et 37. Un bobinage 38 entoure le noyau 35 entre lesdits plaques 36 et 37 (figure 8).

La partie mobile est constituée par un flasque 39 monté à rotation, à l'intervention d'un roulement 40, sur l'axe 31. Ce flasque 39 présente une gorge périphérique 41 de section substantiellement en U dont les branches 42 et 43, telles que vues à la figure 6, s'étendent parallèlement à l'axe de l'arbre 31. Lesdites branches 42 et 43 comportent des paires de surépaisseurs 44 et 45 régulièrement et angulairement espacées, constituant autant de pièces polaires. Entre deux pièces polaires successives, le fond de la gorge 41 est découpé en fenêtres 46 (figure 9).

Les dimensions et l'agencement des éléments susdécrits sont tels que les bobines 35-38 sont engagées dans la gorge 41, tandis que la distance des surépaisseurs 44 et 45 aux bobines, lorsqu'elles sont mutuellement et radialement allignées, correspond à un entrefert usuel, c'est-à-dire une fraction de millimètre.

Un deuxième flasque 47 en alliage léger, solidarisé au flasque 39, est monté sur l'axe 31 à l'intervention d'un roulement 48 et vient fermer l'arrière de la machine.

Dans cet exemple de réalisation, la machine est également destinée à constituer une roue motrice d'un caddy de golf. A cet effet, les flasques 39 et 47 sont ceints d'un pneu plein, schématisé en 49 à la figure 6.

L'alimentation de chaque bobine 8-11 est commandée par un capteur 50 (figure 10) détectant l'approche d'une pièce polaire 42, 43. Il y a donc autant de capteurs que de bobines. Le signal du capteur aboutit à la bobine via un amplificateur de puissance 51.

Afin de réguler la vitesse et de permettre un fonctionnement en roue libre, on prévoit un module 52 de mesure du temps (T) entre deux impulsions successives émises par le capteur 50, ainsi qu'un module 53 générateur, de temps de référence (Tc). Les signaux provenant de 52 et 53 sont comparés dans un module 54 et le résultant est envoyé à un module 55 modifiant ou non la durée de conduction, en fonction du signal qu'il reçoit.

Les modules 27 et 28 sont agencés de manière à remplir les fonctions suivantes ($\eta$T : durée de conduction ou d'alimentation de la bobine, avec $\eta$ fixé par la géométrie de la machine) :

- lorsque $T-\eta T > Tc$ (démarrage), la durée de conduction est celle donnée par le capteur, soit $\eta T$;

- lorsque $T-\eta T < Tc < T$, la durée de conduction est modulée en fonction de $T-Tc$; on se trouve dans une zone de régulation de la vitesse allant de
$$T = Tc \quad \text{à} \quad T = \frac{T_c}{1-\eta}$$

- lorsque $T \leqslant Tc$, suite à une action extérieure, le temps de conduction est nul et la machine fonctionne en roue libre.

Si l'on utilise des bobines $35$-$38$ à faible résistance ohmique, celles-ci pourraient absorber un couvrant prohibitif lors d'un démarrage ou d'un blocage de la machine.

Pour éviter cela, on limite la valeur moyenne du couvrant traversant les bobines à la valeur maximale de courant ($I_c$) tolérée en régime continu. A cet effet, on intègre en permanence les valeurs instantannées du courant traversant une bobine par rapport à la valeur de l'intégration un temps infiniment petit avant (valeur de courant moyen : $I_i$).

La comparaison de $I_c$ et de $I_i$ permet d'annuler le signal à l'entrée de l'amplificateur $24$ lorsque $I_i > I_c$.

Le schéma-bloc complet du circuit est donné à la figure 11. Les signaux provenant du capteur $50$ et du circuit de régulation $52$-$55$ sont envoyés à une porte ET à trois entrées $56$, ainsi que ceux provenant d'un module de limitation $57$, respectivement de sécurité. Ce dernier inclut de préférence une temporisation autorisant une surintensité durant un temps dont la durée est une fonction directe de l'écart entre la valeur moyenne du courant avant son apparition et la valeur maximale de courant tolérée en régime continu.

Il est évident que de nombreuses modifications peuvent être apportées à ce circuit, décrit à titre indicatif.

L'invention se prête particulièrement à une construction modulaire. En effet, on peut aisément réaliser une série d'ensembles stator-rotor d'une puissance nominale unitaire, et caler un nombre voulu de tels ensembles sur un axe commun afin de réaliser un moteur de puissance voulue. Un même circuit intégré peut alors servir pour tous les moteurs, quel que soit le nombre de modules qu'ils contiennent.

Chacun desdits modules peut être constitué par exemple par deux inducteurs diamétralement opposés sur une partie fixe externe, et par une pièce polaire s'étendant selon le diamètre de la partie mobile interne (moteur circulaire), lesdits inducteurs étant simultanément alimentés. Dans ce cas, une isolation magnétique est à prévoir entre les modules.

- 1 - 0006669

Revendications.

1.- Machine à réluctance variable, du type constitué par : une partie fixe; une partie mobile; sur l'une de ces parties, des inducteurs et sur l'autre, au moins une pièce polaire; et un circuit pour l'alimentation séquentielle desdits inducteurs, ces derniers étant à tout moment magnétiquement isolés l'un de l'autre, quelles que soient la position de la pièce polaire et l'alimentation, caractérisée en ce que le déplacement de la pièce mobile (9, 10, 13, 17) s'effectue dans la direction des vecteurs induction, eux-mêmes orthogonaux à l'axe de la machine.

2.- Machine selon la revendication 1, caractérisée en ce que la partie fixe ou stator (1) est cylindrique, porte lesdits inducteurs (2, 3, 4) et est entourée par ladite partie mobile ou rotor (8).

3.- Machine selon la revendication 1, caractérisée en ce que la quantité de fer qu'elle contient est minimum, ce minimum étant déterminé par la section magnétique désirée, d'une part, et par le fait qu'il faut pouvoir entourer le cuivre nécessairement présent, d'autre part.

4.- Machine selon la revendication 1, caractérisée en ce que ledit circuit d'alimentation comprend au moins un détecteur (14) de positionnement des inducteurs par rapport à la ou les pièces polaires ou vice-versa; un amplificateur (24) du courant provenant dudit détecteur; un limiteur (25) d'intensité du courant d'alimentation du circuit et un limiteur (26) de surtension aux bornes des enroulements des inducteurs.

5.- Machine selon la revendication 1, caractérisée en ce que les parties fixe (1) et mobile (8), avec les éléments qu'elles portent, sont réalisées sous forme d'un ensemble modulaire, deux ou plusieurs tels ensembles pouvant être calés sur un même arbre (11) afin de constituer un moteur
de la puissance requise.

6.- Machine selon la revendication 1, caractérisée en ce
que ladite pièce fixe (28) est un moyeu (29) à branches
radiales (30) régulièrement angulairement espacées, ce
moyeu étant calé sur un arbre fixe (31) et les extrémités
libres desdites branches portant chacune un inducteur (34),
tandis que la partie mobile est réalisée sous forme d'un
flasque (39) monté à roulement libre sur ledit arbre, ce
flasque comportant une gorge périphérique (41) contenant
des pièces polaires (44-45), cette gorge venant coiffer
lesdits inducteurs.

7.- Machine selon la revendication 6, caractérisée en ce
que ladite gorge périphérique (41) présente une section
substantiellement en U dont les branches s'étendent parallèlement à l'axe dudit arbre (31).

8.- Machine selon la revendication 7, caractérisée en ce
que lesdites pièces polaires sont constituées chacune par
une paire de surépaisseurs (44, 45) prévues sur les branches de ladite gorge (41).

9.- Machine selon la revendication 8, caractérisée en ce
que le fond de ladite gorge (41) est pourvu d'une pluralité
de fenêtres (46), chacune située entre deux paires de surépaisseurs voisines.

10.- Machine selon la revendication 6, caractérisée en ce
que le circuit d'alimentation séquentielle comporte, par
inducteur, un capteur (50) de position de pièces polaires
(42), un module (52) de mesure du temps entre deux impulsions successives générées par ledit capteur, un générateur
(53) réglable d'un temps de référence, un module (54) de
comparaison des impulsions provenant du module de mesure et
du générateur de référence, un module (55) de modification de la durée de conduction en fonction du signal de sortie du module de comparaison et un amplificateur (51) contrôlant l'alimentation dudit inducteur.

11.- Machine selon la revendication 10, caractérisée en ce que le circuit d'alimentation (52-55) comporte en outre, dans le cas d'un inducteur à faible résistance ohmique, un module (57) de sécurité intégrant en permanence les valeurs instantanées du courant traversant l'inducteur par rapport à la valeur de l'intégration un temps infiniment petit précédent et annulant le signal à l'entrée dudit amplificateur (51) lorsque la valeur de courant moyen est supérieure à la valeur maximale de courant tolérée en régime continu.

12.- Machine selon la revendication 11, caractérisée en ce que le module (57) de sécurité inclut une temporisation autorisant une surintensité durant un temps dont la durée est une fonction directe de l'écart entre la valeur moyenne de courant avant son apparition et le valeur maximale de courant tolérée en régime continu.

Fig. 1

0006669

**Fig.5**

3

4

2

26

24

25

15V
DC

14

+ DC

23

27

**Fig.2**

12

13

Fig.4

Fig.3

3/5

6999000

*Fig. 6*

*Fig. 7*

*Fig. 8*

*Fig. 9*

Fig. 10

Fig. 11

5/5

6999000

**Office européen des brevets**

**RAPPORT DE RECHERCHE EUROPEENNE**

00.06.669

Numéro de la demande

EP 79 20 0333

| Catégorie | Citation du document avec indication, en cas de besoin, des parties pertinentes | Revendication concernée |
|---|---|---|
| | **DOCUMENTS CONSIDERES COMME PERTINENTS** | |
| | US - A - 2 103 356 (FISHER) <br><br> * Page 1, colonne de gauche, lignes 49-53; page 1, colonne de droite, lignes 33-55; page 2, colonne de gauche, lignes 1-46; page 2, colonne de droite, lignes 1-6; figures 1-3 * <br><br> -- | 1,3 |
| | US - A - 2 736 853 (SELGIN) <br><br> * Colonne 1, lignes 55-72; colonne 2, lignes 1-12; figures 1,2,4 * <br><br> -- | 1,3 |
| | FR - A - 637 414 (BESSIERE) <br><br> * Page 2, lignes 3-50; figures 1-3 * <br><br> -- | 1,3 |
| | US - A - 2 281 081 (SHELDON) <br><br> * Page 1. colonne de droite, lignes 1-20; figures 6,7 * <br><br> -- | 1 |
| | US - A - 3 745 388 (FREDERICK) <br><br> * Colonne 2, lignes 15-68; colonne 3, lignes 1-68; colonne 4, lignes 1-20; colonne 5, lignes 11-16; figures 1-4 * <br><br> -- | 3,5 |
| | BE - A - 652 110 (GOLAY BUCHEL) <br><br> * Page 8, lignes 12-25; page 9, lignes 1-15; figures 3 et 4 * <br><br> -- ./. | 2,5 |

**CLASSEMENT DE LA DEMANDE (Int. Cl. ³)**

H 02 K 19/10
H 02 K 29/02

**DOMAINES TECHNIQUES RECHERCHES (Int. Cl. ³)**

H 02 K 19/10
H 02 K 19/06
H 02 K 37/00
H 02 K 25/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-09-1979 | TIO |

OEB Form 1503.1  06.78

Office européen
des brevets

**RAPPORT DE RECHERCHE EUROPEENNE**

0006669

Numéro de la demande

EP 79 20 0333

2-

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | DE - B - 1 243 263 (GUINARD) <br> * Colonne 5, lignes 4-68; colonne 6, lignes 1-26; figure 5 * <br><br> -- | 4 | |
| | FR - A - 701 041 (JANZEN) <br> * Page 2, lignes 1-45; figures 1-9 * <br><br> -- | 6-8 | |
| | FR - A - 2 121 040 (FUJITSU) <br> * Page 3, lignes 6-30; figures 2-7 * <br><br> -- | 8,9 | **DOMAINES TECHNIQUES RECHERCHES (Int. Cl. ³)** |
| | FR - A - 1 592 065 (BARTHALON) <br> * Page 16, colonne de gauche, lignes 19-58; page 16, colonne de droite, lignes 1-22; figure 38 * <br><br> -- | 10 | |
| | FR - A - 2 073 417 (A.S.E.A.) <br> * Page 8, lignes 34-38; page 9, lignes 1-38; page 10, lignes 1-38; page 11, lignes 1-38; page 12, lignes 1-38; page 13, lignes 1-14; figures 7-10 * <br><br> -- | 10,11 | |
| | FR - A - 2 117 307 (SIEMENS) <br> * Page 7, lignes 14-40; page 8, ligens 1-40; page 9,lignes 1-37; page 10, lignes 2-32; page 11, lignes 11-24; figure * <br><br> ---- | 11,12 | |